# EUROPEAN PATENT APPLICATION

(11) **EP 2 412 998 A1**
(43) Date of publication of application: **01.02.2012**
(21) Application number: 10755828.0
(22) Date of filing: 05.03.2010
(51) Int. Cl.: F16D 65/18, B60K 7/00, B60T 1/06

(54) **BRAKE DEVICE FOR IN-WHEEL MOTOR**

(30) Priority: 27.03.2009 JP 2009080296
(71) Applicant: Aisin Seiki Kabushiki Kaisha, Aichi 448-8650 (JP)
(72) Inventor: ABIKO, Jun, Kariya-shi Aichi 448-8650 (JP); ISOGAI, Shigetaka, Kariya-shi Aichi 448-8605 (JP); MORI, Masanori, Kariya-shi Aichi 448-8605 (JP)
(74) Representative: TBK
(86) International application number: PCT/JP2010/053600
(87) International publication number: WO 2010/110027

(57) **Abstract**

This invention relates to a brake device for an in-wheel motor which can be easily attached to the wheel inside. The vehicle wheel (5) is driven by the in-wheel motor (1) attached to the inside of the disc wheel (51). The in-wheel motor (1) transmits the rotation of the rotor (13) to the vehicle wheel (5) with a speed reduced by the planetary gear set (14). The brake device (18) rotates the brake motor (184) to move the plunger (183) in an axial direction. Thus, the brake device (18) squeezes or presses the disc (181) which rotates with the rotor (13) by the first pad (187) and the second pad (188) to apply braking force between the rotor (13) and the planetary gear set (14). According to the invention, there is no need to prepare a hydraulic pressure source, a hydraulic cylinder and a hydraulic pressure conduit system and the brake device (18) can be decreased in size and can be easily attached to the inside of the disc wheel (51).

## Description

### TECHNICAL FIELD

This invention relates to a brake device used for putting a brake on an in-wheel motor which is incorporated into a disc wheel for driving a vehicle wheel.

### BACKGROUND OF THE TECHNOLOGY

Conventionally, the brake device has been known which is used for putting a brake on the in-wheel motor provided in a wheel for giving a braking operation on the vehicle wheel (As shown for example in Patent Document 1). The in-wheel motor disclosed in this conventional art transmits a driving force generated by a rotor to the vehicle wheel through a reduction gear device. The rotation of the reduction gear device is also transmitted to a brake rotor and by squeezing the brake rotor by a pair of pads urged or pressed by means of a hydraulic piston, the braking force is generated and is applied to the in-wheel motor.

### DOCUMENT LIST OF STATE OF ART

### PATENT DOCUMENT

Patent Document 1: JA 2007-313981 A

### DISCLOSURE OF INVENTION

### PROBLEMS TO BE SOLVED

However, according to the brake device for the in-wheel motor disclosed in the Patent Document 1, it is necessary to provide a hydraulic pressure source outside the wheel in order to apply a braking force on the in-wheel motor, which is one of the factors of increasing the cost. Further, it is necessary to provide a hydraulic cylinder and a hydraulic conduit which hydraulically connects the hydraulic cylinder with the hydraulic pressure source inside the wheel. Therefore the brake device becomes large in size and may become difficult to be assembled into the wheel inside.

Particularly, it is difficult to arrange a hydraulic pressure conduit system within the wheel, which connects the hydraulic pressure source with the hydraulic cylinder. In other words, not to mention it is necessary to avoid any interference between the hydraulic pressure conduit and other component elements inside the wheel under the conduit being in static condition, but in addition, it is necessary to avoid the interference between the conduit and other component elements under the hydraulic pressure conduit being in dynamic condition associated with the vibration generated during a vehicle running. For this reason, it is necessary to provide a sufficient space between the hydraulic pressure conduit system and other component elements. This has been one of the barrier factors to the designing of brake device inside of a small, narrow wheel.
The present invention was made in consideration with the above problems and the object of the invention is to provide a brake device for an in-wheel motor which can be easily assembled into the wheel.

### MEANS FOR SOLVING THE PROBLEM

The feature in structure of the invention according to claim 1 made for solving the above problem is **characterized in that** the brake device for an in-wheel motor for putting a brake on the in-wheel motor incorporated into a wheel for driving a vehicle wheel comprises a rotation element to which a rotation torque of a rotor of the in-wheel motor is transmitted, a friction material generating a braking force by squeezing the rotation element and an urging mechanism for pressing the friction material on the rotation element, wherein the urging mechanism includes an electric actuator operable upon supply of electric power.

The feature in structure of the invention according to claim 2 is **characterized in that** in the brake device for an in-wheel motor, the in-wheel motor includes a reduction gear mechanism for transmitting the rotation generated by the rotor to the vehicle wheel with a reduced speed, and the braking force is generated between the rotor and the reduction gear mechanism.

The feature in structure of the invention according to claim 3 is **characterized in that** in the brake device for an in-wheel motor according to claim 1 or 2, the urging mechanism includes a brake housing assembled to a stator housing of the in-wheel motor and movable relative thereto in a rotational axis direction of the rotation element, the brake housing including a pressing portion provided opposing to one side surface of the rotation element, a piston element attached to the brake housing and movable relative thereto in the rotation axis direction of the rotation element, but prevented from rotating relative thereto and opposing to the pressing portion relative to the rotation element and a driving element attached to the brake housing and rotatable relative thereto but prevented from moving in an axial direction, the driving element being threadedly engaged with the piston element, wherein the respective friction material is provided between the one side surface of the rotation element and the pressing portion, and between the other side surface of the rotation element and the piston element, the electric actuator attached to the brake housing is an electric motor which rotates the driving element, and wherein the piston element is moved in a direction apart from the driving element upon rotation of the driving element by an operation of the electric motor, whereby one of the friction materials is pressed towards the rotation element, the brake housing receives a reaction force from the driving element and is moved in a direction opposite to the moving direction of the piston element and whereby the pressing portion presses the other of the friction materials towards the rotation element.

The feature in structure of the invention according to claim 4 is **characterized in that** in the brake device for the in-wheel motor according to claim 3, the driving element is formed so that the driving element is prevented from rotating in a direction in which the braking force is released when a return load is applied towards the driving element from the piston element under the braking force being generated.

The feature in structure of the invention according to claim 5 is **characterized in that** in the brake device for the in-wheel motor according to claim 4, the piston element and the driving element are threadedly engaged with each other by a trapezoidal thread.

The feature in structure of the invention according to claim 6 is **characterized in that** the brake device for the in-wheel motor according to claim 4 or 5, the brake device is used for a parking brake device of a vehicle.

### THE EFFECTS OF THE INVENTION

According to the brake device for the in-wheel motor according to claim 1, since the urging mechanism for pressing the friction material to the rotation element includes the electric actuator operable upon supply of the electric power, there is no need to provide hydraulic pressure source, hydraulic pressure cylinder and the hydraulic pressure conduit system and the brake device for the in-wheel motor can be decreased in size and can be easily assembled into the wheel. Particularly, electric wires for operating the electric actuator can be prepared and arranged together with the electric wiring for driving the rotor of the in-wheel motor and accordingly, the wiring into the wheel inside is made far easily, compared to the arrangement of the hydraulic pressure conduit system.

According to the brake device for the in-wheel motor according to claim 2, since the braking force is generated between the rotor and the reduction gear mechanism, a necessary braking force can be reduced compared to the case where the braking force is applied after the rotation speed has been reduced by the reduction gear mechanism.

According to the brake device for the in-wheel motor according to claim 3, since the friction material is pressed towards the rotation element by the piston element and the brake housing upon rotation of the driving element by the electric motor, the magnitude of the braking force to be generated or the rate of change thereof can be easily controlled by controlling the rotation amount of the electric motor or the rotation speed thereof.

According to the brake device for the in-wheel motor according to claim 4, the driving element is formed not to be rotated in a brake releasing direction in which the braking force is released when the return load is applied to the driving element from the piston element. Therefore, the braking force applied to the in-wheel motor can be maintained even when the rotation torque is applied from the vehicle wheel side under the electric motor being in de-energized condition.

According to the brake device for the in-wheel motor according to claim 5, since the piston element and the driving element are threadedly engaged with each other by a trapezoidal thread, the transmission of movement between the piston element and the driving element can be easily formed to be irreversible.

According to the brake device for the in-wheel motor according to claim 6, since the brake device is used as a parking brake device for a vehicle, the space of the compartment of the vehicle can be saved by eliminating an existing parking brake device, which may lead to a more free designing of layout of the compartment of the vehicle.

### BRIEF EXPLANATION OF ATTACHED DRAWINGS

Fig. 1 is a block view showing a vehicle electric system using the brake device for an in-wheel motor according to an embodiment of the invention;
Fig. 2 is a cross sectional view of the in-wheel motor assembled into the disc wheel, cut in the rotation axis direction and showing only an upper half thereof from the rotation axis;
Fig. 3 is a schematic enlarged view of the brake device for the in-wheel motor of Fig. 2;
Fig. 4 is a view showing the state where the brake device for the in-wheel motor of Fig. 3 generates the braking force; and
Fig. 5 is an enlarged cross sectional view of the threaded portion between the plunger and the rotating body of Fig. 3.

### PREFERRED EMBODIMENTS FOR PRACTICING THE INVENTION:

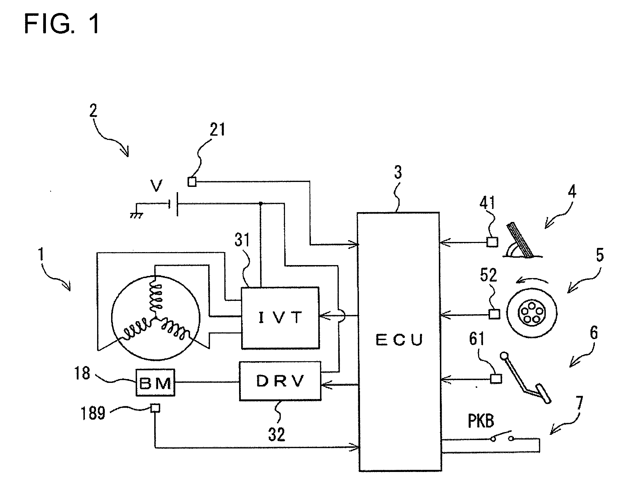

The brake device for an in-wheel motor according to one embodiment of the invention will be explained with reference to the attached drawings, Figs. 1 through 5. Fig. 1 shows an example of a vehicle running system using the brake device for the in-wheel motor. It should be noted here that each connection line connecting each component element indicates the electric connection in Fig. 1. In Fig. 1, the in-wheel motor 1 is located separately from a vehicle wheel 5, but as will be explained later, the in-wheel motor 1 is actually assembled into a disc wheel 51 of the vehicle wheel 5.

The in-wheel motor 1 is a regular three-phase synchronous motor and is connected to a controller 3 for controlling the vehicle running condition (hereinafter called just controller 3) through an inverter 31. The inverter 31 is connected to a vehicle high voltage battery 2. The inverter 31 operates based on a control signal from the controller 3 to supply electricity to the in-wheel motor 1 from the high voltage battery 2 thereby rotating the in-wheel motor 1. A voltage sensor 21 is connected to the high voltage battery 2. The in-wheel motor 1 is used also as a power generator while the controller 3 executes regeneration braking when the battery 2 needs to be charged based on a detection signal from the voltage sensor 21.

A brake device 18 for the in-wheel motor 1 (hereinafter called just brake device 18) is provided within the in-wheel motor 1. A brake motor 184, included in the brake device 18 and later explained in detail, is connected to the controller 3 through a motor driver 32. A torque sensor 189 is provided at the brake device 18 for detecting braking torque being generated. Instead of using such torque sensor 189, a load sensor or the like may be used which detects pressing load by a first pad 187 and a second pad 188 which will be described later.

An acceleration operation amount detecting sensor 41 is connected to the controller 3 for detecting the operation amount of the acceleration pedal 4 of the vehicle. The vehicle wheel speed sensor 52 is connected to the controller 3 for detecting the rotation speed of the vehicle wheel 5, into which the in-wheel motor 1 is assembled. Further, instead of using the vehicle wheel speed sensor 52, a vehicle speed sensor for detecting the vehicle speed or the encoder for detecting rotation speed of the in-wheel motor 1 may be used.

And, a brake operation amount detecting sensor 61 is connected to the controller 3 for detecting the operation amount of the brake pedal 6 of the vehicle. Further, a parking brake switch 7 for the vehicle is connected to the controller 3. The switch 7 is operated when an operator of the vehicle operates the parking brake.

According to the vehicle running system as explained above, the controller 3 transmits a control signal to the inverter 31 in response to the operation amount of the acceleration pedal 4 by the operator of the vehicle and the wheel speed of the vehicle wheel 5 and then the controller 3 rotates the in-wheel motor 1 with a desired rotation speed to run the vehicle. The technology of the method for controlling the vehicle running is a conventional one and not the subject of this invention and no further explanation will be made hereinafter.

When the operator of the vehicle operates the brake pedal 6, the controller 3 transmits a control signal to the motor driver 32 in response to the operation amount of the brake pedal 6, wheel speed of the wheel 5 and the braking torque of the brake device 18. The motor driver 32 controls the operation of the brake motor 184 of the brake device 18 based on the control signal from the controller 3 to generate a desired braking force for the in-wheel motor 1. Further, when the operator of the vehicle operates the parking brake switch 7, the controller 3 operates the brake device 18 to give the braking force to the in-wheel motor 1.

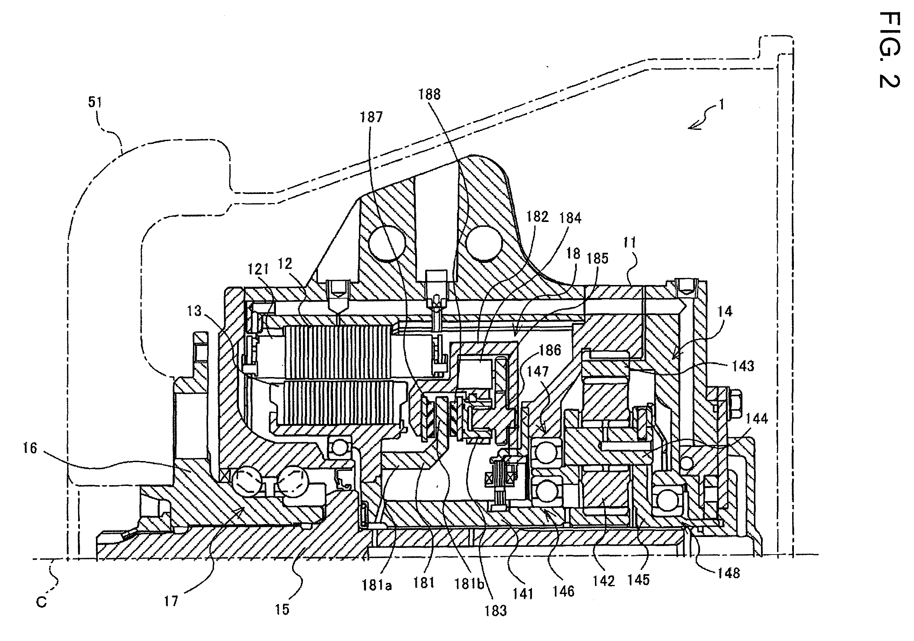

Next, the structure of the in-wheel motor 1 having the brake device 18 will be explained with reference to Fig. 2. It should be noted here that during the explanation, the left side in Fig. 2 may be indicated as frontward. However, this direction indication is not related with the actual direction of the in-wheel motor 1 assembled to the vehicle. As explained above, the in-wheel motor 1 is assembled into the inside of the disc wheel 51 (corresponding to the wheel according to the invention) of the vehicle wheel 5. The stator housing 11 of the in-wheel motor 1 is, for example, attached to a knuckle arm (not shown) of the vehicle and is formed to be of approximately cylindrical shape.

An approximately annular shaped stator 12 is attached to the inner circumferential surface of the stator housing 11. A plurality of coils 121 are wound around the stator 12 to form a rotating magnetic field. A rotor 13 is attached to the inner circumferential surface side of the stator 12 and is relatively rotatable thereto. When the coils 121 of the stator 12 are energized, the rotor 13 is rotated centering on a rotation axis C.

A sun gear 141 of a planetary gear set 14 is connected to the inner side of the rotor 13 in a radial direction and the rotation torque from the rotor 13 is transmitted to the sun gear 141. The planetary gear set 14 corresponds to the reduction gear mechanism of the in-wheel motor 1 and is formed by the sun gear 141 extended in an axial direction, a plurality of pinion gears 142, each engaging with one end of the sun gear 141, a ring gear 143 in engagement with the pinion gears 142, a carrier 144 for carrying the pinion gears 142 and a connecting element 145 connected to the carrier 144.

As shown in Fig. 2, a first bearing 146 is disposed between the sun gear 141 and the carrier 144, a second bearing 147 is disposed between the carrier 144 and the stator housing 11 and a third bearing 148 is disposed between the connecting element 145 and the stator housing 11, respectively. The planetary gear set 14 is structured as explained above and the ring gear 143 is fixed to the stator housing 11 and the rotation of the rotor 13 is inputted to the sun gear 141 and outputted to the connecting element 145 with a reduced rotation speed.

The inner side of the connecting element 145 is in splined engagement with a rotation shaft 15. The rotation shaft 15 is engaged with the connecting element 145 at the rear end thereof and extends forwardly in an axial direction. A wheel hub 16 is fixed to the front end of the rotation shaft 15 and the disc wheel 51 as explained above is attached to the front end surface of the wheel hub 16. Further, a main bearing 17 is disposed between the wheel hub 16 and the stator housing 11. According to the structure explained above, when the electricity is supplied to the in-wheel motor 1, the rotation of the rotor 13 is transmitted to the rotation shaft 15 with the speed reduced by the planetary gear set 14. The rotation shaft 15 rotates centering on the rotation axis C to drive the vehicle wheel 5 through the wheel hub 16.

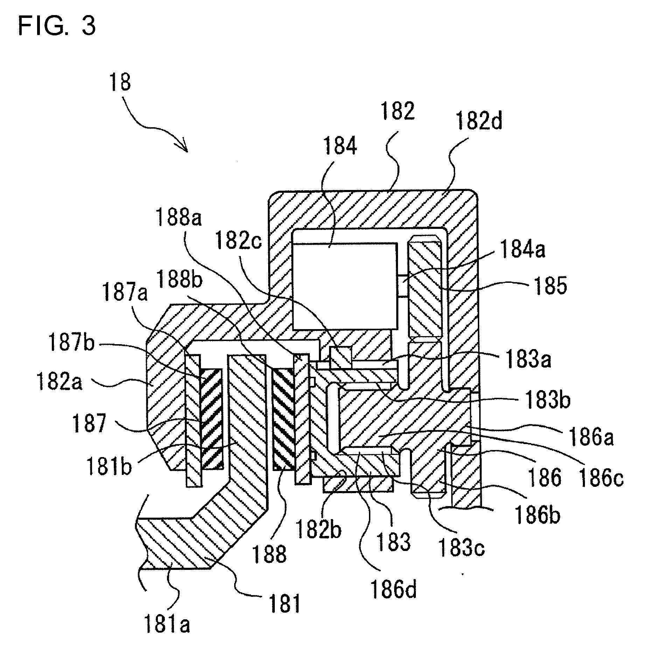

Next, detail of the brake device 18 will be explained with reference to Figs. 2 and 3. It should be noted here that during the explanation, the left side in Fig. 3 may be indicated as frontward. However, this direction indication is not related with the actual direction of the brake device 18 assembled to the vehicle. A disc 181 (corresponding to the rotation element of the invention) forming the brake device 18 is connected to the rotor 13 at the inward portion thereof in a radial direction. The disc 181 includes an attachment portion 181a which is connected to the rotor 13 and a disc shaped flat plate portion 181 b extending outwardly in a radial direction from the attachment portion 181 a. The disc 181 rotates centering on the rotation axis C with the rotor 13.

The brake device 18 is provided with a caliper 182 (corresponding to the brake housing of the invention) attached to the stator housing 11 and movable relative to the stator housing 11 in a rotation axis C direction (right and left side direction as viewed in Fig. 3) of the disc 181. The caliper 182 includes a claw portion 182a (corresponding to the pressing portion of the invention) provided opposite to the one side surface of the disc 181 (left side surface as viewed in Fig. 3). The claw portion 182a is formed opposing to the flat plate portion 181 b of the disc 181, keeping a predetermined space apart from a circular portion on the flat plate portion 181b of the disc 181.

The caliper 182 is provided with a cylinder portion 182b extending in the rotation axis C direction and positioned opposite to the claw portion 182a relative to the disc 181. A plunger 183 (corresponding to the piston element of the invention) is disposed inside of the cylinder portion 182b and relatively movable therein in the rotation axis C direction. The plunger 183 is arranged opposite to the claw portion 182a of the caliper 182 sandwiching the disc 181 therebetween.

The plunger 183 is formed to be of approximately cylindrical shape having a closed front end. The outer peripheral portion of the plunger is provided with a slit 183a extending in the rotation axis C direction. An engaging element 182c fixed to the cylinder portion 182b is inserted into the slit 183a so that the plunger 183 may not rotate. Further, the plunger 183 is provided with an inner bore 183b which is open rearward and a female thread portion 183c is formed at the inner peripheral surface of the inner bore 183b.

A holding portion 182d is formed on the caliper 182 to be in connection with the claw portion 182a. The holding portion 182d is provided with a predetermined size space inside thereof for accommodating therein the brake motor 184 (corresponding to the electric motor and the electric actuator of the invention). An electric motor, such as, a stepping motor or the like may be used for the brake motor 184. The output shaft 184a of the brake motor 184 is connected to a driving gear 185 and a rotating body 186 (corresponding to the driving element of the invention) is provided in the holding portion 182d and is in engagement with the driving gear 185.

The rotating body 186 is formed with a shaft portion 186a attached to the holding portion 182d and rotatable relative thereto but prevented from moving in an axial direction, a wheel portion 186b connected to the shaft portion 186a and engaged with the driving gear 185 and an engaging portion 186c projecting from the wheel portion 186b and inserted into the inner bore 183b of the plunger 183. A male thread portion 186d is provided on the outer peripheral surface of the engaging portion 186c for engagement with the female thread portion 183c of the plunger 183.

A first pad 187 (corresponding to the friction material of the invention) is disposed between the one side surface of the flat plate portion 181 b of the disc 181 and the claw portion 182a. The first pad 187 includes a back plate 187a to be in contact with the claw portion 182a and a lining 187b adhered to the back plate 187a and making a slidable contact with the flat plate portion 181 b. The lining 187b puts a brake on the rotation of the disc 181 by slidable contact with the flat plate portion 181 b.

On the other hand, a second pad 188 (corresponding to the friction material of the invention) is disposed between the other side surface of the flat plate portion 181b of the disc 181 and the plunger 183. The second pad 188 includes, similar to the first pad 187, a back plate 188a to be in contact with the plunger 183 and a lining 188b adhered to the back plate 188b and making a slidable contact with the flat plate portion 181 b. The lining 188b puts a brake on the rotation of the disc 181 by slidable contact with the flat plate portion 181 b.

Under the condition shown in Fig. 3, when the operator of the vehicle operates the brake pedal 6, or operates the parking brake switch 7, the controller 3 supplies electricity from the high voltage battery 2 through the motor driver 32 to rotate the brake motor 184. By this rotation of the brake motor 184, the rotating body 186 is driven through the driving gear 185. However, since the plunger 183 threadedly engaged with the rotating body 186 is prevented from rotation, the plunger 183 moves in a direction apart from the rotating body 186 (in the left direction as viewed in Fig. 3) in accordance with the rotation amount of the rotating body 186 and presses the second pad 188 towards the flat plate portion 181 b of the disc 181.

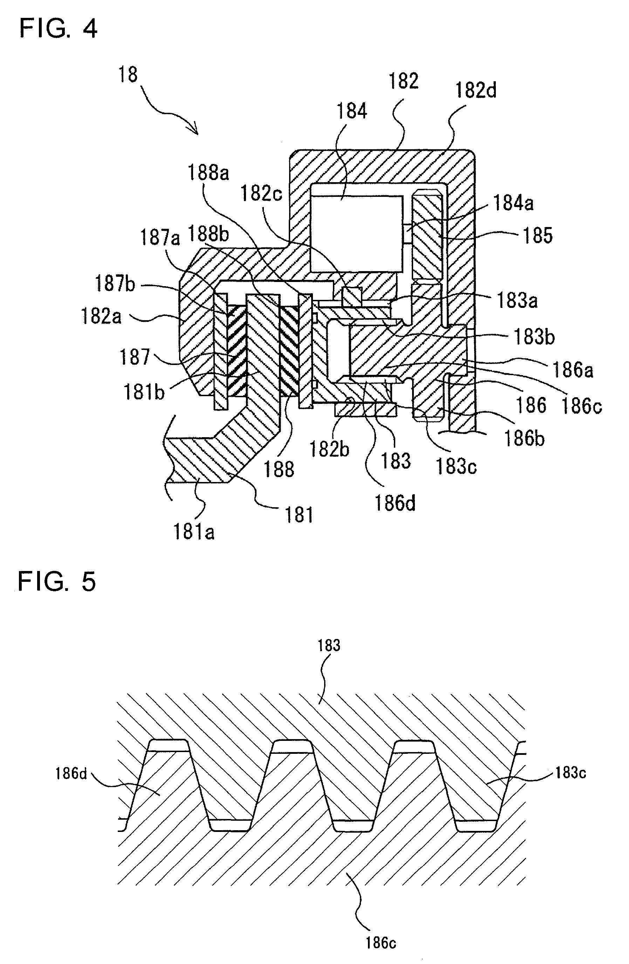

On the other hand, due to the leftward movement of the plunger 183, the caliper 182 having received a reaction force from the rotating body 186, moves in a direction opposite to the moving direction of the plunger 183 (in the right direction as viewed in fig. 3) relative to the stator housing 11 for the claw portion 182a to press the first pad 187 towards the flat plate portion 181 b. The braking force is generated by squeezing both sides of the disc 181 by the first pad 287 and the second pad 188 to put a brake on the rotor 13 of the in-wheel motor 1 (See Fig. 4). As explained above, the brake device 18 generates the braking force between the rotor 13 and the planetary gear set 14 by attaching the disc 181 to the rotor 13.

When the braking force is desired to be released in the brake device 18, the brake motor 184 is rotated in a reverse direction to the direction as explained above. Then the rotating body 186 is also rotated in a direction reverse to the direction in braking operation. The plunger 183 is retreated to the right as viewed in Fig. 4 to release the pressing operation of the second pad 188 onto the disc 181. By the retreat of the plunger 183, the reaction force applied on the caliper 182 is decreased and the caliper 182 is retreated to the left as viewed in Fig. 4 to release the pressing operation of the first pad 187 onto the disc 181.

The female thread portion 183c of the plunger 183 and male thread portion 186d of the rotating body 186 are both formed to be of trapezoidal thread and the efficiency of inversely transmitting movement from the plunger 183 to the rotating body 186 is set to be substantially zero (See Fig. 5). Accordingly, the transmission of movement between the plunger 183 and the rotating body 186 is irreversible. If any return load is applied on the rotating body 186 from the plunger 183 during generation of the braking force, the rotating body 186 would not be rotated in a direction in which the braking force is released.

According to this embodiment of the invention, since the brake motor 184 operated by a supply of electricity is used for pressing the first pad 187 and the second pad 188 to the disc 181, there is no need to prepare the hydraulic pressure source, hydraulic cylinder and hydraulic pressure conduit system and a brake device with compact size, easy to be assembled into the disc wheel 51 can be provided. The electric wiring for operating the brake motor 184 can be commonly arranged with the electric wiring for driving the rotor 13 of the in-wheel motor 1, which may facilitate the wiring into the disc wheel 51, significantly simple compared to the arrangement of the hydraulic pressure conduit system.

Further, the brake device 18 is structured to generate the braking force between the rotor 13 and the planetary gear set 14 and this structure can reduce the necessary braking torque compared to the structure in which the braking force is applied after the reduction by the planetary gear set 14. This can reduce the outer diameter of the disc 181 and the load to pressurize the disc 181 can be reduced. Accordingly, the size of the brake device 18 can be decreased. Further, the rotating body 186 is rotated by the brake motor 184, and thus the plunger 183 and the caliper 182 push or press the first pad 287 and the second pad 188 towards the disc 181. This can easily control the magnitude of the braking force to be generated or the rate of change of the braking force, etc by controlling the rotation amount of the brake motor 184 or the rotation speed thereof, etc by the controller 3.

According to the embodiment of the invention, the efficiency of inversely transmitting movement from the plunger 183 to the rotating body 186 is set to be substantially zero and the transmission of movement therebetween is formed to be irreversible. Accordingly, when the power distribution to the brake motor 184 is stopped under the disc 181 being squeezed between the first pad 187 and the second pads 188, the braking force applied to the in-wheel motor 1 can be maintained even if the rotation torque is transmitted from the vehicle wheel 5. This can realize the use of the brake device 18 as a parking brake device for the vehicle.

Further, since the plunger 183 and the rotating body 186 are threadedly engaged with a trapezoidal thread, the transmission of movement therebetween can be easily made irreversible. Further, by using the brake device 18 as a parking brake device for a vehicle, the existing parking brake device can be eliminated thereby to save the space of vehicle compartment. This can allow more freedom of designing for the compartment layout.

### <Other Embodiments>

The present invention is not limited to the embodiment explained above and the following changes and modifications will be within the scope of the invention.
The brake device 18 according to the invention can be used as explained above for both foot brake device and parking brake device for a vehicle, or may be used only for the foot brake device and as the parking brake device a conventional parking brake device can be used. Further, the brake device 18 is used only for a parking brake device and as the foot brake device, a conventional disc brake device to be attached to the vehicle wheel 5 may be used. Further, in addition to these, a regeneration brake by the in-wheel motor 1 can be appropriately used.

In order to reduce the efficiency of inversely transmitting movement from the plunger 183 to the rotating body 186, it is not necessarily required to use the trapezoidal thread for the female thread portion 183c and the male thread portion 186d and any other shaped thread can be used. The in-wheel motor 1 is not limited to the synchronous type motor and any type electric motor can be used.

The brake motor 184 is not limited to the stepping motor and any other type electric motor, such as synchronous, induction, or DC motor can be used. The electric actuator for pressurizing the second pad 188 towards the disc 181 is not limited to the electric motor, and for example, the electric actuator using an electromagnetic solenoid or any other type electric actuator can be used.

### INDUSTRIAL APPLICABILITY

The brake device for an in-wheel motor associated with this invention can be used for a brake device for putting a brake on a wheel in a four-wheeled vehicle, a two-wheeled vehicle or any other type vehicle in which an in-wheel motor for driving the vehicle wheel is provided inside the disc wheel.

### EXPLANATION OF REFERENCE NUMERALS

In the drawings: numeral 1 designates an in-wheel motor, numeral 5 designates a vehicle wheel, numeral 11 designates a stator housing, numeral 13 designates a rotor, numeral 14 designates a planetary gear set (reduction gear mechanism), numeral 18 designates a brake device for an in-wheel motor, numeral 51 designates a disc wheel (wheel), numeral 181 designates a disc (rotation element), numeral 182 designates a caliper (braking housing, urging mechanism), numeral 182a designates a claw portion (pressing portion), numeral 183 designates a plunger (piston element, pressurizing mechanism), numeral 184 designates a brake motor (electric actuator, electric motor, urging mechanism), numeral 186 designates a rotating body (driving element, urging mechanism), numeral 187 designates a first pad (friction material) and numeral 188 designates a second pad (friction material), respectively.

## Claims

1. A brake device for an in-wheel motor for putting a brake on the in-wheel motor incorporated into a wheel for driving a vehicle wheel, comprising:
a rotation element to which a rotation torque of a rotor of the in-wheel motor is transmitted; a friction material generating a braking force by squeezing the rotation element; and,
an urging mechanism for pressing the friction material on the rotation element, wherein the urging mechanism includes an electric actuator operable upon supply of electric power.

2. The brake device for an in-wheel motor according to claim 1, wherein the in-wheel motor includes a reduction gear mechanism for transmitting the rotation generated by the rotor to the vehicle wheel with a reduced speed, and the braking force is generated between the rotor and the reduction gear mechanism.

3. The brake device for an in-wheel motor according to claim 1 or 2, wherein the urging mechanism includes a brake housing assembled to a stator housing of the in-wheel motor and movable relative thereto in a rotational axis direction of the rotation element, the brake housing including a pressing portion provided opposing to one side surface of the rotation element, a piston element attached to the brake housing and movable relative thereto in the rotation axis direction of the rotation element, but prevented from rotating relative thereto and opposing to the pressing portion relative to the rotation element and a driving element attached to the brake housing and rotatable relative thereto but prevented from moving in an axial direction, the driving element being threadedly engaged with the piston element, wherein the respective friction material is provided between the one side surface of the rotation element and the pressing portion, and between the other side surface of the rotation element and the piston element, the electric actuator attached to the brake housing is an electric motor which rotates the driving element, and wherein the piston element is moved in a direction apart from the driving element upon rotation of the driving element by an operation of the electric motor, whereby one of the friction materials is pressed towards the rotation element, the brake housing receives a reaction force from the driving element and is moved in a direction opposite to the moving direction of the piston element and whereby the pressing portion presses the other of the friction materials towards the rotation element.

4. The brake device for the in-wheel motor according to claim 3, wherein the driving element is formed so that the driving element is prevented from rotating in a direction in which the braking force is released when a return load is applied towards the driving element from the piston element under the braking force being generated.

5. The brake device for the in-wheel motor according to claim 4, wherein the piston element and the driving element are threadedly engaged with each other by a trapezoidal thread.

6. The brake device for the in-wheel motor according to claim 4 or 5, wherein the brake device is used for a parking brake device of a vehicle.

## Amended claims

### Amended claims under Art. 19.1 PCT

**1.** Amended) A brake device for an in-wheel motor for putting a brake on the in-wheel motor incorporated into a wheel for driving a vehicle wheel, comprising:
a rotation element to which a rotation torque of a rotor of the in-wheel motor is transmitted;
a friction material generating a braking force by squeezing the rotation element;
an urging mechanism for pressing the friction material on the rotation element by means of an electric actuator operable upon supply of electric power; wherein:
the in-wheel motor includes a reduction gear mechanism for transmitting the rotation generated by the rotor to the vehicle wheel with a reduced speed; and
the barking force is generated between the rotor and the reduction gear mechanism.
**2.** Cancelled)
**3.** Amended) The brake device for an in-wheel motor according to claim 1, wherein the urging mechanism includes:
a brake housing assembled to a stator housing of the in-wheel motor and movable relative thereto in a rotational axis direction of the rotation element, the brake housing including a pressing portion provided opposing to one side surface of the rotation element;
a piston element attached to the brake housing and movable relative thereto in the rotation axis direction of the rotation element, but prevented from rotating relative thereto and opposing to the pressing portion relative to the rotation element;
a driving element attached to the brake housing and rotatable relative thereto but prevented from moving in an axial direction, the driving element being threadedly engaged with the piston element; wherein:
the respective friction material is provided between the one side surface of the rotation element and the pressing portion, and between the other side surface of the rotation element and the piston element,
the electric actuator attached to the brake housing is an electric motor which rotates the driving element, and wherein the piston element is moved in a direction apart from the driving element upon rotation of the driving element by an operation of the electric motor, whereby one of the friction materials is pressed towards the rotation element,
the brake housing receives a reaction force from the driving element and is moved in a direction opposite to the moving direction of the piston element and whereby the pressing portion presses the other of the friction materials towards the rotation element.
**4.** Original) The brake device for the in-wheel motor according to claim 3, wherein the driving element is formed so that the driving element is prevented from rotating in a direction in which the braking force is released when a return load is applied towards the driving element from the piston element under the braking force being generated.
**5.** Original) The brake device for the in-wheel motor according to claim 4, wherein the piston element and the driving element are threadedly engaged with each other by a trapezoidal thread.
**6.** Original) The brake device for the in-wheel motor according to claim 4 or 5, wherein the brake device is used for a parking brake device of a vehicle.
